# EUROPÄISCHE PATENTSCHRIFT

(11) **EP 2 116 134 B1**
(45) Veröffentlichungstag und Bekanntmachung des Hinweises auf die Patenterteilung: **04.07.2018**
(21) Anmeldenummer: 09159816.9
(22) Anmeldetag: 08.05.2009
(51) Int. Cl.: A22B 5/20

(54) **Anordnung zum Spalten eines Schlachttieres**
Assembly for splitting an animal carcass
Agencement de fendage d'un animal d'abattage

(30) Priorität: 09.05.2008 DE 202008000054 U; 14.08.2008 DE 202008008813 U
(43) Veröffentlichungstag der Anmeldung: 11.11.2009
(73) Patentinhaber: BANSS SCHLACHT- UND FÖRDERTECHNIK GMBH, 35216 Biedenkopf (DE)
(72) Erfinder: Schmidt, Frank, 35232, Dautphetal (DE); Stark, Marek, 35083, Wetter (DE)
(74) Vertreter: Stoffregen, Hans-Herbert

(56) Entgegenhaltungen:
- EP-A1- 0 801 900
- WO-A1-03/028469
- FR-A1- 2 573 625
- FR-A1- 2 576 183
- US-A- 637 490

## Beschreibung

Die Erfindung bezieht sich auf eine Anordnung zum Spalten eines Schlachttieres entlang dessen Wirbelsäule mit entlang der Wirbelsäule verstellbarer innerer und/oder äußerer Führungseinrichtung, die zwei zueinander beabstandet verlaufende Kufenelemente aufweist, die im Wirbelsäulenbereich des Schlachttieres anlegbar sind, sowie zwei Rollenelemente.

Spaltanordnungen sind zum Beispiel der DE-T-601 00 277 oder der EP-B-0 801 900 oder DE-T-601 00 042 zu entnehmen. Zum Spalten der Schlachttiere werden diese an den Hinterbeinen aufgehängt, um sodann nach Öffnen von Bauchdecke und Brustbein und Entfernen der Innereien ein vollständiges Teilen des Schlachttieres vorzunehmen. Hierzu wird ein Element wie Kreissäge vertikal von den Hinterbeinen ausgehend zum Kopf hin geführt, wobei das Schlachttier entlang der Wirbelsäule durchteilt wird. Um ein ordnungsgemäßes Durchtrennen, also Spalten zu ermöglichen, liegen sowohl außenseitig an dem Schlachttier als auch im Inneren im Bereich der Wirbelsäule äußere bzw. innere Führungseinrichtungen an, die nach dem Stand der Technik als Rollen ausgebildet sind, die um Achsen drehbar sind, die ein V zueinander bilden. Da die Führungselemente als Rollen ausgebildet sind, erfolgt weitgehend im Bereich jeder Rolle nur ein punktueller Kontakt, so dass die gewünschte ordnungsgemäße Führung häufig nicht gegeben ist mit der Folge, dass die Schneideeinrichtung wie Kreissäge, deren Bewegung der inneren Führungseinrichtung folgt, Fehlschnitte durchführt.

Aus der FR-A-2 535 944 ist eine Vorrichtung zum Spalten von Schweinen bekannt, die eine entlang der Wirbelsäule eines Schlachttiers verstellbare innere Führungseinrichtung umfasst, die eine Nierenform aufweist. Eine vom Aufbau her ähnliche Führungseinrichtung ist der US-A-4,667,368 zu entnehmen.

Die DE-T-696 22 762 sieht ein Führungselement einer Spaltvorrichtung vor, das zueinander beabstandete Gleitschienen umfasst.

Die DE-A-1 817 274 bezieht sich auf eine Spaltvorrichtung für Schlachttiere und weist ein als Führungsglied bezeichnetes Führungselement auf.

Aus der FR-A-2 576 183 sind Führungseinrichtungen für Schlachttiere bekannt. Eine der Führungseinrichtungen besteht aus einem inneren entlang der Wirbelsäule geführten Kufenelementenpaar und die andere Führungseinrichtung aus einem entlang der Außenseite der Wirbelsäule geführten Rollenpaar.

Eine gleichfalls entlang der Wirbelsäule eines Schlachttieres geführte Einrichtung nach der WO-A-03/028469 weist zueinander beabstandete Kufenelemente auf.

Flügelartige Führungselemente werden nach der US-A-637,490 entlang der Wirbelsäule eines Schlachttieres geführt, um dieses zu spalten.

Der vorliegenden Erfindung liegt die Aufgabe zu Grunde, eine exakte Führung der Führungseinrichtung im Inneren des Schlachttiers bzw. am Äußeren entlang der Wirbelsäule sicherzustellen, damit eine exakte Ausrichtung des Schlachttiers erfolgt und insbesondere das Schneidorgan das Schlachttier präzise spaltet. Dabei soll auch ein problemloses Anpassen an den Verlauf der Wirbelsäule insbesondere im Bereich der Vorderbeine erfolgen, in dem die Wirbelsäule zu diesen hin höckerförmig vorsteht.

Die Aufgabe wird erfindungsgemäß im Wesentlichen durch eine Anordnung gemäß Anspruch 1 gelöst, wobei die innere und/oder die äußere Führungseinrichtung sowohl die zwei zueinander beabstandet verlaufenden Kufenelemente als auch die zwei Rollenelemente umfasst, die in Verlängerung der Kufenelemente angeordnet sind.

Erfindungsgemäß erfolgt eine Kontaktierung der Führungseinrichtung mit dem Schlachttier im Bereich der Wirbelsäule derart, dass zu beiden Seiten der Wirbelsäule neben einem linienförmigen Anliegen zusätzlich ein rollendes punktuelles Kontaktieren erfolgt, wodurch eine exakte Ausrichtung des Schlachttieres zu einem Schneidorgan wie Kreissäge sichergestellt ist. Die Rollenelemente sind in Verlängerung der Kufenelemente angeordnet und weisen einen wirksamen Abstand auf, der dem der Kufenelemente entsprechen sollte. Deren lichter Abstand liegt bevorzugterweise zwischen 25 mm und 40 mm, ohne dass jedoch hierdurch die erfindungsgemäße Lehre eingeschränkt wird.

Insbesondere ist vorgesehen, dass die Rollenelemente beim Spalten des Schlachttieres vor den Kufenelementen angeordnet sind. Dabei spannen die Rollenelemente jeweils eine Ebene auf, in der das nachgeordnete Kufenelement verläuft. Die Erfindung wird jedoch auch dann nicht verlassen, wenn die Rollen den Kufen nachgeordnet sind - betrachtet in Spaltrichtung.

Des Weiteren sollten die Rollenelemente von Tragelementen ausgehen, mit denen die Kufenelemente verbunden sind und die um eine eine Halterung durchsetzende Achse schwenkbar sind, die sich senkrecht zum Spaltverlauf erstreckt. Somit sind Kufen- und Rollenelemente als Einheit verschwenkbar.

Ferner ist vorgesehen, dass jedes Rollenelement um eine Achse drehbar ist, die parallel zu der eines drehenden Schneidorgans wie Trennscheibe verläuft, mittels derer das Schlachttier gespalten wird. Die Achse des Rollenelements verläuft somit auch parallel zu der Achse, um die die Tragelemente schwenkbar sind.

Durch das Verschwenken der Kufen- und Rollenelemente ist ein problemloses Anpassen in Längsrichtung der Wirbelsäule möglich. Dabei ist den Tragelementen bzw. einem diese aufnehmenden Träger ein Anschlag zugeordnet, um ein zu starkes Verkippen beim Anfahren an das Schlachttier bzw. den Wirbelsäulenbereich bzw. beim Entfernen von diesem zu vermeiden.

Jedes Kufenelement ist ein plattenförmiges Blechelement, das in Seitenansicht eine keilartige Geometrie aufweisen kann. Das Kufenelement ist z. B. aus einem Blech wie Edelstahlblech z. B. mittels Laser ausgeschnitten und ist in seinen Rändern zumindest schlachttierseitig verrundet. Ferner weist das Kufenelement wirbelsäulenseitig einen ersten Außenabschnitt, einen sich anschließenden mittleren Abschnitt und einen zweiten äußeren Abschnitt auf, wobei in Spaltverlaufsrichtung des Schlachttieres der erste äußere Abschnitt wirbelsäulenseitiger unterer Endbereich und der zweite äußere Abschnitt wirbelsäulenseitiger oberer Endbereich des Randes ist.

Die äußeren Abschnitte bzw. der mittlere Abschnitt sind bevorzugterweise wie folgt gestaltet. So kann der erste äußere Abschnitt einen in den mittleren Abschnitt übergehenden gekrümmten Abschnitt und einen in tangentialer Verlängerung dieses sich erstreckenden Endabschnitt umfassen. Der mittlere Abschnitt wiederum sollte stetig sowohl in den ersten äußeren als auch in den zweiten äußeren Abschnitt übergehen, wobei insbesondere der mittlere Abschnitt in seinen Enden tangential in das jeweilige Ende des ersten bzw. zweiten äußeren Abschnitts übergeht.

Wie der erste äußere Abschnitt so sollte der zweite äußere Abschnitt in seinem mit dem Schlachttier in Berührung gelangenden Bereich gekrümmt sein, wobei jedoch Bogenlänge des zweiten äußeren Abschnitts länger als die des ersteren äußeren Abschnitts sein kann. Unabhängig hiervon sollte der Krümmungsradius von dem ersten Außenabschnitt gleich dem des zweiten Abschnitts sein.

Der zwischen dem ersten und zweiten äußeren Abschnitt verlaufende mittlere Abschnitt erstreckt sich bevorzugterweise entlang einer Geraden, die Abschnitt einer vom Umfang des Radius ausgehenden Tangente ist.

Der erste äußere und/oder der zweite äußere Abschnitt weist bevorzugterweise einen Krümmungsradius Rₐ mit 30 mm ≤ Rₐ ≤ 40 mm, insbesondere Rₐ ≈ 35 mm auf. Die Rollenelemente sollen einen gleichen Durchmesser R_{R} aufweisen, wobei bevorzugte Werte zwischen 40 mm und 50 mm, insbesondere von in etwa 45 mm für den Radius R_{R} anzugeben sind.

Der mittlere geradlinige Abschnitt des Kufenelementes kann eine Länge L zwischen 20 mm und 40 mm, vorzugsweise im Bereich von 25 mm aufweisen.

Kann der mittlere Abschnitt gewünschte Geometrien aufweisen, so ist bevorzugterweise der geradlinige Verlauf zu wählen. Somit ergeben sich ein linienförmiger Kontakt und ein punktförmiger Kontakt durch das Kufenelement und das Rollenelement mit dem Schlachttier, wobei der punktförmige Kontakt auf einer Verlängerung des linienförmigen liegt. Es liegen gleichzeitig linien- und punktförmige Kontakte vor, die eine exakte Ausrichtung des Schlachttieres ermöglichen. Durch das Rollenelement ist zusätzlich sichergestellt, dass ein Entlanggleiten an oder im Bereich der Wirbelsäule mit geringem Widerstand erfolgt.

Das jeweilige Kufenelement in seinem mit dem Schlachttier wechselwirkenden Bereich sollte eine Länge zwischen 80 mm und 100 mm aufweisen, betrachtet entlang einer Geraden, in der der mittlere Abschnitt liegt. Die tatsächliche Länge ist somit größer.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der Zeichnung zu entnehmenden bevorzugten Ausführungsbeispielen.

Es zeigen:
- Fig. 1:: eine perspektivische Darstellung einer ersten Ausführungsform einer Führungseinrichtung,
- Fig. 2:: eine erste Ausführungsform eines Kufenelementes,
- Fig. 3:: eine zweite Ausführungsform eines Kufenelementes,
- Fig. 4:: eine dritte Ausführungsform eines Kufenelementes,
- Fig. 5:: eine Prinzipdarstellung der Führungseinrichtung im Wirkbereich der Wirbelsäule eines Schlachttieres,
- Fig. 6:: eine zweite Ausführungsform einer Führungseinrichtung und
- Fig. 7:: eine Vorderansicht der Führungseinrichtung gemäß Fig. 6.

Um Schlachttiere wie Schweine zu teilen bzw. zu spalten, werden diese in gewohnter Weise entlang einer Schlachtstraße an ihren Hinterbeinen hängend entlang einer Transportbahn gefördert. Nach dem Entbluten, Entfernen der Vorderpfoten, Augen und/oder Ohren, Entfernen des Rektums und Öffnen des Schlossbeines werden in gewohnter Weise Bauchdecke und Brustbein durchtrennt, um die Innereien zu entfernen. Zum Spalten wird sodann von außen an das Schlachttier eine Führungseinrichtung gelegt, die zur Wirbelsäule positioniert wird. In das Innere des Schlachttieres fährt eine weitere Führungseinrichtung mit einem zugeordneten Schneidorgan wie Kreissägeblatt ein, um sodann durch vertikale Verstellung der Führungseinrichtungen zusammen mit dem Schneidorgan das Schlachttier im Bereich der Wirbelsäule zu durchtrennen. Dabei sollen die Führungseinrichtungen sicherstellen, dass ein ordnungsgemäßes vertikal verlaufendes Spalten ohne Fehlschnitt durchgeführt werden kann. Erfindungsgemäß wird eine Führungseinrichtung in Form einer Schlittenanordnung benutzt, die zwei zueinander beabstandete Kufen sowie zwei Rollen umfasst, die im Bereich der Wirbelsäule zumindest abschnittsweise sowohl linienförmig und beabstandet hierzu punktförmig anliegen.

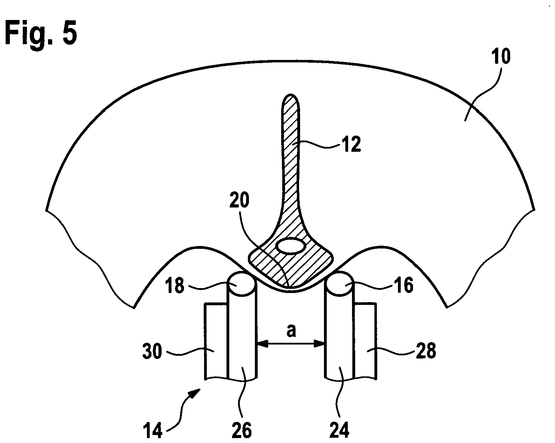

Eine innere Führungseinrichtung 14 ist prinzipiell und im Ausschnitt der Fig. 5 zu entnehmen. So sieht man ein geöffnetes Schlachttier 10 im Ausschnitt mit einer Wirbelsäule 12, zu der die innere Führungseinrichtung 14 ausgerichtet wird, die im Bereich der Wirbelsäule 12 im Inneren des Schlachttieres 10 an diesem anliegt. Außenseitig im Bereich der Wirbelsäule 12 ist eine nicht dargestellte äußere Führungseinrichtung angeordnet, die der erfindungsgemäßen entsprechen kann. Es besteht jedoch auch die Möglichkeit, als äußere Führungseinrichtung eine solche zu verwenden, die dem Stand der Technik bzw. den eingangs genannten Dokumenten zu entnehmen ist.

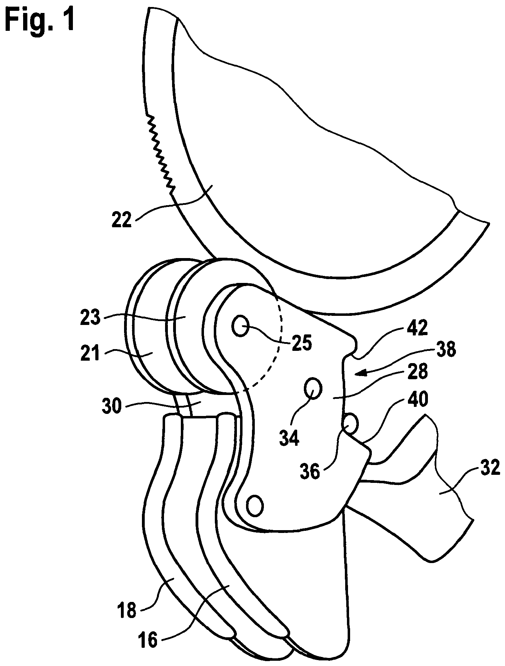

Die nachstehend als Schlitten bezeichnete innere Führungseinrichtung 14 umfasst erwähntermaßen zwei zueinander beabstandete Kufen 16, 18 sowie Rollen 21, 23 (Fig. 1, 6, 7). Der lichte Abstand a der Kufen 16, 18 bzw. Rollen 21, 23 sollte im Bereich zwischen 25 mm und 40 mm liegen, so dass eine Abstützung im Bereich der Längsseitenränder der Wirbelsäule 12 möglich ist, folglich der nach innen gerichtete Vorsprung 20 der Wirbelsäule 12 zwischen den Kufen 16,18 und Rollen 21, 23 verläuft, wodurch die gewünschte Führung sichergestellt ist.

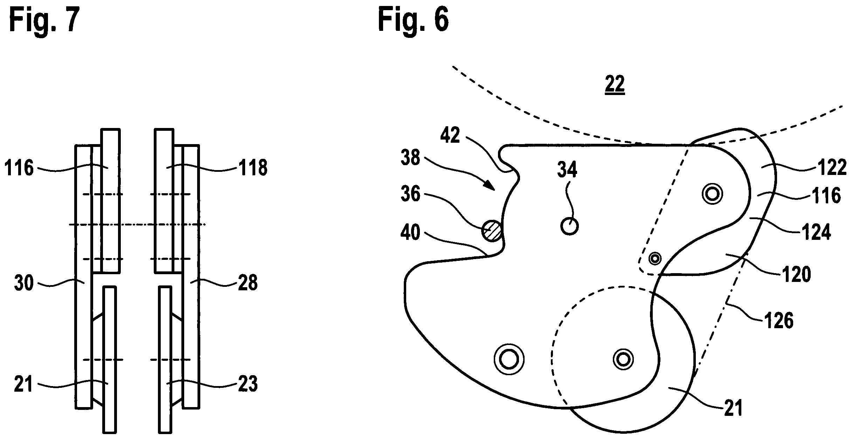

Dem Schlitten 14 ist ein Schneidorgan wie Kreissägeblatt 22 zugeordnet, wie sich aus den Fig. 1 und 6 ergibt. Dieses kann sich abschnittsweise im oberen Bereich zwischen den Kufen erstrecken, wie die Fig. 6 rein prinzipiell verdeutlicht. Somit verlaufen beim Spalten die Rollen 21, 23 vor den Kufen 16, 18.

Es besteht jedoch entsprechend der Darstellung gemäß Fig. 1 die Möglichkeit, dass sich das Schneidorgan 22 zwischen den Rollen 21 und 23 erstreckt. In diesem Fall sind in Spaltrichtung betrachtet die Rollen 21, 23 den Kufen nachgeordnet. Bevorzugterweise verlaufen jedoch die Rollen 21, 23 vor den Kufen, wie dies aus der Fig. 6 ersichtlich wird.

Bei der nachstehenden Beschreibung der Ausführungsbeispiele werden grundsätzlich gleiche Elemente mit gleichen Bezugszeichen gekennzeichnet. Ferner wird nachstehend unter Kufen jedwede Gestaltung verstanden, mit der ein zumindest linienförmiges - ggfs. unterbrochen linienförmiges - Anliegen im Wirbelsäulenbereich des Schlachttieres erfolgt. Die Kufen können dabei aus einem plattenförmigen Basiselement mit aufgesetztem Rundeisen oder aus einem Scheibenelement mit abgerundeten Rändern bestehen. Andere konstruktive Möglichkeiten sind gleichfalls gegeben. Insoweit ist die Erläuterung der Ausführungsbeispiele nicht schutzeinschränkend zu verstehen.

Der Schlitten 14 weist zwei plattenförmige Elemente 24, 26 auf, deren äußere wirbelsäulenseitig verlaufende Ränder verrundet sind oder Aufsätze aufweisen, wie nachstehend beschrieben wird. Die plattenförmigen Elemente 24, 26 gehen ihrerseits von plattenförmigen Tragelementen 28, 30 aus, die mit einer Halterung 32 verbunden sind, die von einer nicht dargestellten Handhabungseinrichtung zusammen mit dem Kreissägeblatt 22 verstellt und vertikal entlang der Wirbelsäule 12 zum Spalten dieser verfahren werden. Der Schlitten 14 ist zu der Halterung 32 um eine Achse 34 schwenkbar. Hierzu geht die Achse 34 von der Halterung 32 aus und durchsetzt die Tragelemente 28, 30. Ferner ist ein Zapfen 36 vorgesehen, der ortsfest zu der Halterung 32 positioniert ist und die Schwenkbewegung des Schlittens 14 um die Achse 34 einschränkt. Hierzu weisen die Tragelemente 28, 30 rückseitig eine Aussparung 38 mit Anschlägen 40, 42 auf, die die Schwenkbewegung begrenzen.

Wie die Fig. 1 verdeutlicht, geht von den Tragelementen 28, 30 jeweils ein Rollenelement 21, 23 aus, das jeweils um eine Achse 25 drehbar ist, die parallel zu der Achse 34 verläuft, um die die Tragelemente 28, 30 und damit die plattenförmigen Kufenelemente 24, 26 und die Rollenelemente 21, 23 gemeinsam zu der Halterung 32 verschwenkbar sind.

Aus Gründen der Vereinfachung wird nachstehend der Bereich der plattenförmigen Elemente 24, 26, der an dem Schlachttier 10 im Bereich der Wirbelsäule 12 anlegbar ist, als Kufe bezeichnet, unabhängig davon, ob es sich hierbei um einen verrundeten Rand des vorzugsweise aus Edelstahl bestehenden Elements 24, 26 oder einen Aufsatz in Form von z. B. einem gebogenen Rundeisen handelt oder eine sonstige Gestaltung bzw. Konstruktion vorgesehen ist, die die Führungsfunktion des Schlittens 14 entlang der Wirbelsäule 20 in bzw. am Schlachttier 10 ermöglicht.

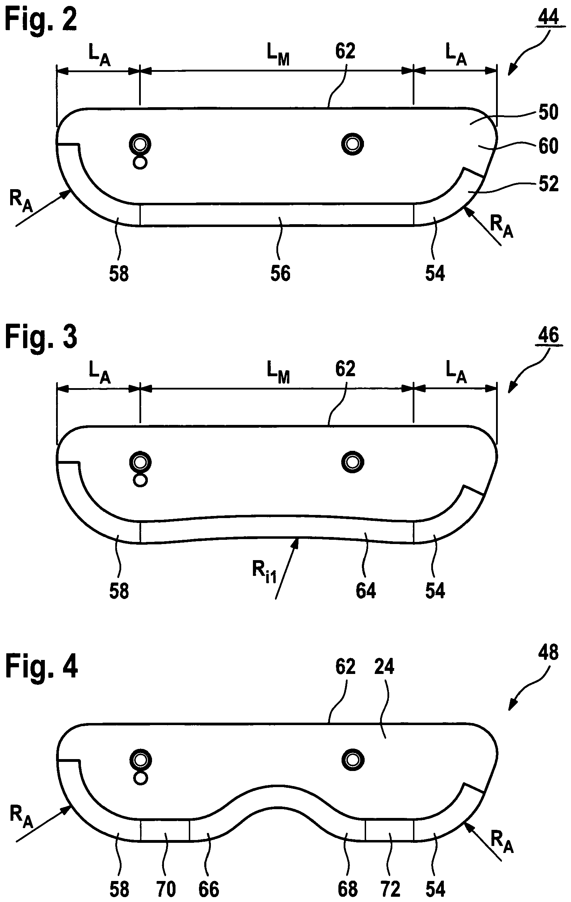

In den Fig. 2 bis 4 sind Ausführungsformen von Kufenelementen 44, 46, 48 dargestellt, wobei gleichfalls für gleiche Elemente bzw. Bereiche gleiche Bezugszeichen verwendet werden.

Das Kufenelement 44 gemäß Fig. 2 weist ein plattenförmiges als Trägerkörper 50 bezeichnetes Element auf, der zusammen mit schlachttierseitig verlaufender Kufe 52 in Seitenansicht eine Trapezgeometrie aufweist. Dabei erstreckt sich die Kufe 52 entlang der kurzen Basis.

Die Kufe 52 setzt sich grundsätzlich aus drei Abschnitten zusammen, nämlich einem ersten äußeren Abschnitt 54, einem mittleren Abschnitt 56 und einem weiteren äußeren Abschnitt 58. Dabei ist der erste äußere Abschnitt 54 bei Benutzung nach unten ausgerichtet, d. h., dass der zweite äußere Abschnitt 58 dem Sägeblatt 22 zugewandt ist.

Der erste äußere Abschnitt 54 folgt einem Bogen mit einem äußeren Radius Rₐ von z. B. 45 mm. Der bogenförmige Verlauf geht außenseitig in einen sich tangential fortsetzenden Abschnitt 56 des Trägerkörpers 50 über. Dieser Bereich 58 kann jedoch auch durch die Kufe 52 gebildet sein.

Der zweite äußere Abschnitt 58 sollte vorzugsweise einen gleichen Krümmungsradius Rₐ aufweisen wie der erste äußere Abschnitt 54, wobei der Bogenverlauf sich über einen Winkel von 90° erstrecken kann. Demgegenüber kann der gekrümmte Verlauf des ersten äußeren Abschnitts 54 kleiner gewählt werden, z. B. 60° bis 70°.

Die Längen der äußeren Abschnitte 54, 58 betrachtet entlang der längeren Basis 62 des Trägerkörpers 50 sollten gleich sein. Als bevorzugte Werte sind z. B. 40 mm bis 60 mm anzugeben. Der zwischen den äußeren Abschnitten 54, 58 verlaufende mittlere Abschnitt 56, dessen Längenerstreckung entlang der Längenbasis 62 im Bereich zwischen 130 mm und 170 mm liegen kann, weist im Ausführungsbeispiel der Fig. 2 einen geradlinigen Verlauf auf und geht stetig in die äußeren Abschnitte 54, 58 über. Der mittlere Abschnitt 56 stellt dabei folglich eine tangentiale Erstreckung der inneren Enden der äußeren Abschnitte 54, 58 dar.

Nach dem Ausführungsbeispiel der Fig. 3 weist das Kufenelement 46 eine ähnliche Form wie das Kufenelement 44 mit der Einschränkung auf, dass neben in etwa geometrisch gleich ausgebildeten äußeren Abschnitten 54, 58 der zwischen diesen verlaufende mittlere Abschnitt 64 der Kufe einen gekrümmt konkaven Verlauf zeigt. Dabei kann der Krümmungsradius Rᵢ₁ der Außenseite des Abschnitts 64 im Bereich zwischen 450 mm und 550 mm liegen.

Das Kufenelement 48 gemäß Fig. 4 unterscheidet sich in den äußeren Abschnitten 54, 56 von den Kufenelementen 44, 46 der Fig. 2 und 3 grundsätzlich nicht, so dass gleiche Bezugszeichen benutzt werden. Allerdings ist der mittlere Abschnitt 66 der Kufe dahingehend abweichend konstruiert, dass sich dieser aus einem inneren Abschnitt 68 und angrenzenden gradlinigen Endabschnitten 70, 72 zusammensetzt.

Der innere Abschnitt 68 kann entlang des Basisschenkels 62 des Trägerkörpers 50 des Kufenelements 48 eine Länge von z. B. 140 mm bis 160 mm aufweisen. Dabei sollte die Erstreckung des inneren Abschnitts 68 im Bereich zwischen 90 mm und 110 mm liegen. Die symmetrisch zu dem inneren Abschnitt 68 verlaufenden Endabschnitte 70, 72 weisen demzufolge Längen von 20 mm bis 25 mm auf, bei gleicher Längenerstreckung des Trägerkörpers 50 entsprechend den Ausführungsbeispielen der Figuren 2 und 3.

Der Krümmungsradius des inneren Abschnitts 68 sollte dem der äußeren Abschnitte 54, 58 entsprechen, d. h. der äußere wirksame Krümmungsradius Rᵢ₂ entspricht R_{A}.

Durch eine diesbezügliche Konstruktion ergibt sich insbesondere der Vorteil, dass ein problemloses Führen entlang der Wirbelsäule im Bereich der Vorderbeine erfolgt, in dem die Wirbelsäule in Richtung der Vorderbeine vorspringt, also einen Höcker bildet. Somit ist weiterhin ein weitgehend linienförmiges Anliegen möglich, wodurch eine sichere Führung gewährleistet ist.

Der Fig. 6 ist eine hervorzuhebende Ausgestaltung der erfindungsgemäßen Lehre zu entnehmen, bei der ebenfalls neben Kufenelementen 116, 118 die Rollenelemente 21, 23 vorgesehen sind, die um die Achse 25 drehbar sind, die parallel zur Achse des Trennorgans 22 verläuft. Ferner sind die Rollenelemente 21, 23 in Bezug auf die Spaltverlaufsrichtung des Schlachttiers 10 vor den Kufenelementen 116, 118 angeordnet, eilen diesen folglich voraus.

Die lichte wirksame Breite der Rollenelemente 21, 23 sollte die der Kufenelemente 116, 118 in dem Bereich sein, in dem diese an dem Schlachttier 10 anliegen.

Durch die Kombination der Führungsrollen 21, 23 mit der Gleitführung über die Kufen 116, 118 ergibt sich eine optimale Ausrichtung des Wirbelsäulenbereichs des Schlachttiers 10 zu dem Trennorgan 22.

Die Kufenelemente 116, 118 weisen in Seitenansicht eine keilartige Geometrie auf, wobei der erste äußere einem Kreisbogenabschnitt folgende Abschnitt 120 und der zweite gleichfalls einem Kreisbogenabschnitt folgende äußere Abschnitt 122 vorzugsweise einen gleichen Krümmungsradius aufweisen, der im Bereich zwischen 30 mm und 40 mm liegen sollte. Zwischen den äußeren Abschnitten 120, 122 verläuft ein mittlerer Abschnitt 124, der stetig in die äußeren Abschnitte 120, 122 übergeht und geradlinig verläuft. Dabei sind die Kufenelemente 116, 118 in Bezug auf den mittleren Abschnitt 124 derart ausgerichtet, dass dieser in Verlängerung einer Tangente 126 verläuft, die von der Peripherie des jeweiligen Rollenelementes 21, 23 ausgeht. Die Länge des mittleren Abschnitts 124 sollte im Bereich von 20 mm bis 40 mm liegen.

Die Länge der äußeren Abschnitte 120, 122, die einem Kreisbogen folgen und der mittlere Abschnitt 124 betrachtet in Projektion auf eine Gerade, in der der mittlere Abschnitt 124 liegt, beläuft sich vorzugsweise zwischen 80 mm und 100 mm, ohne dass hierdurch die erfindungsgemäße Lehre eingeschränkt wird.

Wie sich aus der Darstellung der Fig. 6 und 7 ergibt, gehen die Kufenelemente 116, 118 und die vorgeordneten Rollenelemente 21, 23 jeweils von einem plattenförmigen Tragelement aus, das dem der Fig. 1 entspricht, so dass gleiche Bezugszeichen verwendet werden. Die Tragelemente 28, 30 bilden eine Einheit, die um die Achse 34 schwenkbar ist, wie dies im Zusammenhang mit der Fig. 1 erläutert worden ist. Kufenabgewandt weisen die Tragelemente 28, 30 jeweils eine Aussparung 38 auf, die durch Anschläge 40, 42 begrenzt ist. In die Aussparung 38 greift ein von der Halterung 32 ausgehender Gegenanschlag wie Zapfen 36 ein, so dass die Schwenkbewegung der Tragelemente 28, 30 und damit der Kufenelemente 116, 118 und der Rollenelemente 121, 123 begrenzt ist.

## Patentansprüche

1. Anordnung zum Spalten eines Schlachttieres (10) entlang dessen Wirbelsäule (12) mit entlang der Wirbelsäule verstellbarer innerer und/oder äußerer Führungseinrichtung (14), die zwei zueinander beabstandet verlaufende Kufenelemente (16, 18, 116, 118) aufweist, die im Wirbelsäulenbereich des Schlachttieres anlegbar sind, sowie zwei Rollenelemente (21, 23),
**dadurch gekennzeichnet,**
**dass** die innere und/oder die äußere Führungseinrichtung (14) sowohl die zwei zueinander beabstandet verlaufenden Kufenelemente (16, 18, 116, 118) als auch die zwei Rollenelemente (21, 23) umfasst, die in Verlängerung der Kufenelemente (16, 18, 116, 118) angeordnet sind.

2. Anordnung nach Anspruch 1,
**dadurch gekennzeichnet,**
**dass** die Rollenelemente (21, 23) jeweils um eine erste Achse (25) drehbar sind, die senkrecht zu von den Kufenelementen (16, 18, 116, 118) aufgespannten Ebenen beziehungsweise parallel zu einer Achse eines drehenden Spaltorgans (22) verläuft.

3. Anordnung nach Anspruch 1 oder 2,
**dadurch gekennzeichnet,**
**dass** die Rollenelemente (21, 23) einen wirksamen lichten Abstand aufweisen, der wirksamem lichten Abstand der Kufenelemente entspricht.

4. Anordnung nach zumindest einem der vorhergehenden Ansprüche,
**dadurch gekennzeichnet,**
**dass** die Rollenelemente (21, 23) in Spaltverlaufsrichtung des Schlachttiers (10) vor den Kufenelementen (116, 118) angeordnet oder diesen nachgeordnet sind.

5. Anordnung nach zumindest einem der vorhergehenden Ansprüche,
**dadurch gekennzeichnet,**
**dass** die Kufenelemente (16, 18, 116, 118) und/oder die Rollenelemente (21, 23) mit einer Halterung (32) verbunden sind, zu der die Kufenelemente und/oder die Rollenelemente um eine parallel zu der ersten Achse (25) der Rollenelemente verlaufenden zweiten Achse (34) schwenkbar sind.

6. Anordnung nach zumindest einem der vorhergehenden Ansprüche,
**dadurch gekennzeichnet,**
**dass** das Kufenelement (16, 18, 44, 46, 116, 118) ein flächiges Element mit einem vorzugsweise schlachttierseitig verrundeten Rand oder Aufsatz umfasst, der unmittelbar im Bereich der Wirbelsäule (12) an das Schlachttier (10) anlegbar ist, wobei insbesondere das Kufenelement und/oder das Rollenelement (21, 23) von einem Tragelement (28, 30) ausgeht, das von der zweiten Achse (34) durchsetzt und um diese schwenkbar ist.

7. Anordnung nach zumindest einem der vorhergehenden Ansprüche,
**dadurch gekennzeichnet,**
**dass** das Kufenelement (16, 18, 44, 46, 116, 118) in seinem Rand bzw. Aufsatz wirbelsäulenseitig einen ersten äußeren Abschnitt (54, 120), einen sich anschließenden mittleren Abschnitt (56, 64, 66, 124) und einen sich anschließenden zweiten äußeren Abschnitt (58, 122) umfasst, dass in Spaltverlaufsrichtung des Schlachttieres (10) der erste äußere Abschnitt (54, 120) unterer Endbereich und der zweite äußere Abschnitt (58, 122) wirbelseitiger oberer Endbereich des Randes bzw. des Aufsatzes des Kufenelements ist und dass insbesondere der erste und zweite äußere Abschnitt wirbelsäulenseitig einem Bogenabschnitt folgen und stetig in den mittleren Abschnitt übergehen.

8. Anordnung nach Anspruch 7,
**dadurch gekennzeichnet,**
**dass** der mittlere Abschnitt (124) entlang einer Geraden verläuft, der Abschnitt einer vom Umfang des Rollenelementes (21, 23) ausgehenden Tangente (126) ist.

9. Anordnung nach Anspruch 7,
**dadurch gekennzeichnet,**
**dass** der erste äußere Abschnitt (54, 120) und der zweite äußere Abschnitt (58, 122) in ihrem gebogenen bzw. gekrümmten Bereich einen gleichen Krümmungsradius aufweisen.

10. Anordnung nach Anspruch 7 oder 9,
**dadurch gekennzeichnet,**
**dass** der erste äußere und/oder der zweite äußere Abschnitt (120, 122) einen schlachttierseitig verlaufenden Krümmungsradius Rₐ mit 30 mm ≤ Rₐ ≤ 40 mm, insbesondere Rₐ in etwa 35 mm und/oder das Rollenelement (21, 23) einen Radius R_{R} mit 40 mm ≤ R_{R} ≤ 50 mm, insbesondere R_{R} in etwa 45 mm aufweist.

11. Anordnung nach Anspruch 7,
**dadurch gekennzeichnet,**
**dass** der mittlere geradlinig verlaufende Abschnitt (124) des Kufenelements (116, 118) eine Länge L mit 20 mm ≤ L ≤ 40 mm, insbesondere 25 mm ≤ L ≤ 35 mm aufweist.

12. Anordnung nach zumindest einem der vorhergehenden Ansprüche,
**dadurch gekennzeichnet,**
**dass** das Kufenelement (116, 118) ein plattenförmiges Blechelement aus Edelstahl ist und in Seitenansicht insbesondere eine Keilform aufweist.

13. Anordnung nach den Ansprüchen 5 und 6, **dadurch gekennzeichnet,**
**dass** das Kufenelement (16, 116; 18, 118) und das in Verlängerung dieses angeordnete Rollenelement (21; 23) von dem plattenförmigen Tragelement (28, 30) ausgeht, das kufen- bzw. rollenabgewandt Anschläge (40, 42) aufweist, die mit einem von der Halterung (32) ausgehenden Gegenanschlag wie Zapfen (36) zur Begrenzung der Schwenkbewegung des Tragelementes wechselwirken.

14. Anordnung nach den Ansprüchen 5 und 6, **dadurch gekennzeichnet,**
**dass** die Tragelemente (28, 30) der Kufenelemente (16, 116, 18 ,118) als Einheit um die zweite Achse (34) schwenkbar sind, die von der Halterung (32) ausgeht.

15. Anordnung nach den Ansprüchen 2 und 5, **dadurch gekennzeichnet,**
**dass** die Halterung (32) und das Spaltorgan (22) mit einer Handhabungsvorrichtung wie Roboter verbunden sind.

## Claims

1. An arrangement for splitting an animal carcass (10) along its spine (12), with an inner and/or outer guide device (14) adjustable along the spine, which guide device has two skid elements (16, 18, 116, 118) extending at a distance from one another and which can be applied in the spine region of the animal carcass, and two roller elements (21, 23),
**characterized in that**
the inner and/or outer guide device (14) comprises both the two skid elements (16, 18, 116, 118) extending at a distance from one another and the two roller elements (21, 23), which are arranged as extensions of the skid elements (16, 18, 116, 118).

2. An arrangement according to claim 1,
**characterized in that**
the roller elements (21, 23) are each rotatable about a first axis (25), which extends perpendicular to planes defined by the skid elements (16, 18, 116, 118) and/or parallel to an axis of a rotating splitting member (22).

3. An arrangement according to claim 1 or 2,
**characterized in that**
the roller elements (21, 23) have an effective clear spacing which corresponds to the effective clear spacing of the skid elements.

4. An arrangement according to at least one of the preceding claims,
**characterized in that**
the roller elements (21, 23) are arranged upstream of the skid elements (116, 118) or downstream thereof in the splitting direction of the animal carcass (10).

5. An arrangement according to at least one of the preceding claims,
**characterized in that**
the skid elements (16, 18, 116, 118) and/or the roller elements (21, 23) are connected to a holder (32), relative to which the skid elements and/or the roller elements may be pivoted about a second axis (34) extending parallel to the first axis (25) of the roller elements.

6. An arrangement according to at least one of the preceding claims,
**characterized in that**
the skid element (16, 18, 44, 46, 116, 118) comprises a planar element with a preferably rounded edge or attachment on the animal carcass side, which edge or attachment may be applied to the animal carcass (10) directly in the region of the spine (12), wherein the skid element and/or the roller element (21, 23) in particular extends from a supporting element (28, 30) through which the second axis (34) passes and which is pivotable about the latter.

7. An arrangement according to at least one of the preceding claims,
**characterized in that**
the skid element (16, 18, 44, 46, 116, 118) comprises, on the spine side in its edge or attachment, a first outer portion (54, 120), an adjacent middle portion (56, 64, 66, 124) and an adjacent second outer portion (58, 122), **in that** in the splitting direction of the animal carcass (10) the first outer portion (54, 120) is the lower end region and the second outer portion (58, 122) is the spine-side upper end region of the edge or the attachment of the skid element and **in that** in particular the first and second outer portions follow an arcuate portion on the spine side and merge continuously with the middle portion.

8. An arrangement according to claim 7,
**characterized in that**
the middle portion (124) extends in a straight line, which is a portion of a tangent (126) extending from the circumference of the roller element (21, 23).

9. An arrangement according to claim 7,
**characterized in that**
the first outer portion (54, 120) and the second outer portion (58, 122) have an identical radius of curvature in their arcuate or curved region.

10. An arrangement according to claim 7 or 9,
**characterized in that**
the first outer and/or the second outer portion (120, 122) has a radius of curvature Rₐ extending on the animal carcass side of 30 mm ≤ Rₐ ≤ 40 mm, in particular Rₐ is approximately 35 mm, and/or the roller element (21, 23) has a radius R_{R} of 40 mm ≤ R_{R} ≤ 50 mm, in particular R_{R} is approximately 45 mm.

11. An arrangement according to claim 7,
**characterized in that**
the middle portion (124), extending in a straight line, of the skid element (116, 118) has a length L of 20 mm ≤ L ≤ 40 mm, in particular 25 mm ≤ L ≤ 35 mm.

12. An arrangement according to at least one of the preceding claims,
**characterized in that**
the skid element (116, 118) is a plate-shaped sheet metal element of special steel and in side view in particular is wedge-shaped.

13. An arrangement according to claims 5 and 6,
**characterized in that**
the skid element (16, 116, 18, 118) and the roller element (21, 23) arranged as an extension thereof extend from the plate-shaped supporting element (28, 30), which has limit stops (40, 42) remote from the skids or rollers, which limit stops interact with a mating stop extending from the holder (32), such as peg (36), to limit the pivoting movement of the supporting element.

14. An arrangement according to claims 5 and 6,
**characterized in that**
the supporting elements (28, 30) of the skid elements (16, 116, 18, 118) are pivotable as a unit about the second axis (34), which extends from the holder (32).

15. An arrangement according to claims 2 and 5,
**characterized in that**
the holder (32) and the splitting member (22) are connected to a handling device such as a robot.

## Revendications

1. Dispositif pour diviser un animal d'abattage (10) le long de sa colonne vertébrale (12) avec un équipement de guidage (14) intérieur et/ou extérieur réglable le long de la colonne vertébrale, lequel équipement de guidage présente deux patins (16, 18, 116, 118) écartés l'un de l'autre et applicables dans la zone de la colonne vertébrale de l'animal d'abattage ainsi que deux éléments à rouleaux (21, 23),
**caractérisé en ce**
**que** l'équipement de guidage (14) intérieur et/ou extérieur comprend aussi bien les deux patins (16, 18, 116, 118) écartés l'un de l'autre que les deux éléments à rouleaux (21, 23) disposés dans le prolongement des patins (16, 18, 116, 118).

2. Dispositif selon la revendication 1,
**caractérisé en ce**
**que** les éléments à rouleaux (21, 23) sont pivotables chacun autour d'un premier axe (25) qui s'étend perpendiculairement à des plans sous-tendus par les patins (16, 18, 116, 118) ou parallèlement à un axe d'un organe diviseur rotatif (22).

3. Dispositif selon la revendication 1 ou 2,
**caractérisé en ce**
**que** les éléments à rouleaux (21, 23) présente un écart intérieur effectif, correspondant à l'écart intérieur effectif des patins.

4. Dispositif selon au moins une des revendications précédentes,
**caractérisé en ce**
**que** les éléments à rouleaux (21, 23) sont disposés en amont ou aval des patins (116, 118) dans le sens du tracé de division de l'animal d'abattage (10).

5. Dispositif selon au moins une des revendications précédentes,
**caractérisé en ce**
**que** les patins (16, 18, 116, 118) et/ou les éléments à rouleaux (21, 23) sont reliés à une fixation (32) par rapport à laquelle les patins et/ou les éléments à rouleaux sont pivotables autour d'un second axe (34) s'étendant parallèlement audit premier axe (25) des éléments à rouleaux.

6. Dispositif selon au moins une des revendications précédentes,
**caractérisé en ce**
**que** le patin (16, 18, 44, 46, 116, 118) comprend un élément plat avec un bord ou une pièce rapportée arrondis de préférence du côté de l'animal d'abattage, qui est applicable sur l'animal d'abattage (10) directement dans la zone de la colonne vertébrale (12), sachant que notamment le patin et/ou l'élément à rouleau (21, 23) part d'un élément porteur (28, 30) traversé par ledit second axe (34) et pivotable autour de celui-ci.

7. Dispositif selon au moins une des revendications précédentes,
**caractérisé en ce**
**que** le patin (16, 18, 44, 46, 116, 118) comprend dans son bord ou sa partie rapportée côté colonne vertébrale une première section extérieure (54, 120), une section médiane consécutive (56, 64, 66,124) et une seconde section extérieure consécutive (58, 122), que dans le sens du tracé de division de l'animal d'abattage (10), la première section extérieure (54, 120) est la partie finale inférieure et la seconde section extérieure (58, 122) est la partie finale supérieure côté colonne vertébrale du bord ou de la pièce rapportée du patin et que notamment la première et seconde section extérieure suivent un section arquée côté colonne vertébrale et se fondent de façon continue dans la section médiane.

8. Dispositif selon la revendication 7,
**caractérisé en ce**
**que** la section médiane (124) s'étend le long d'une droite qui est une partie d'une tangente (126) partant de la circonférence de l'élément à rouleau (21, 23).

9. Dispositif selon la revendication 7,
**caractérisé en ce**
**que** la première section extérieure (54, 120) et la seconde section extérieure (58, 122) présentent un rayon de courbure identique dans leur partie arquée ou incurvée.

10. Dispositif selon la revendication 7 ou 9,
**caractérisé en ce**
**que** la première et/ou la seconde section extérieure (120, 122) présente un rayon de courbure s'étendant côté animal d'abattage Rₐ tel que 30 mm ≤ Rₐ ≤40 mm, notamment Rₐ mesurant environ 35 mm et/ou que l'élément à rouleau (21, 23) présente un rayon R_{R} tel que 40 mm ≤ R_{R} ≤ 50 mm, notamment R_{R} mesurant environ 45 mm.

11. Dispositif selon la revendication 7,
**caractérisé en ce**
**que** la section médiane (124) du patin (116, 118), s'étendant en ligne droite présente une longueur L telle que 20 mm ≤ L ≤ 40 mm, notamment 25 mm ≤ L ≤ 35 mm.

12. Dispositif selon une des revendications précédentes,
**caractérisé en ce**
**que** le patin (116, 118) est un élément de tôle en acier spécial en forme de plaque et est notamment cunéiforme en vue de côté.

13. Dispositif selon la revendication 5 ou 6,
**caractérisé en ce**
**que** le patin (16, 116, 18, 118) et l'élément à rouleau (21, 23) dans le prolongement de celui-ci part de l'élément porteur (28, 30) en forme de plaque qui présente des butées (40, 42) côté opposé au patin ou au rouleau, lesquelles butées interagissent avec une contre-butée partant de la fixation (32), tel un tourillon (36), pour limiter le mouvement d'oscillation de l'élément porteur.

14. Dispositif selon les revendications 5 et 6
**caractérisé en ce**
**que** les éléments porteurs (28, 30) des patins (16, 116, 18, 118) sont pivotables en un bloc autour du second axe (34) qui part de la fixation (32).

15. Dispositif selon les revendications 2 et 5,
**caractérisé en ce**
**que** la fixation (32) et l'organe diviseur (22) sont reliés à un dispositif de manipulation tel un robot.
